Europäisches Patentamt

European Patent Office

Office européen des brevets

(11) Publication number: **0 304 193 B1**

(12) EUROPEAN PATENT SPECIFICATION

(45) Date of publication of patent specification: **30.12.92**  (51) Int. Cl.⁵: **B64F  5/00**, B08B 1/04

(21) Application number: **88307179.7**

(22) Date of filing: **03.08.88**

(54) **Rotating-brush washing apparatus.**

(30) Priority: **04.08.87 JP 195110/87**
     **04.08.87 JP 119696/87**

(43) Date of publication of application:
     **22.02.89 Bulletin  89/08**

(45) Publication of the grant of the patent:
     **30.12.92 Bulletin  92/53**

(84) Designated Contracting States:
     **DE FR GB**

(56) References cited:
     FR-A- 2 488 157     GB-A- 1 327 901
     US-A- 3 439 372     US-A- 3 665 542
     US-A- 3 680 164     US-A- 3 835 498
     US-A- 4 499 624     US-A- 4 570 278

     Japanese Utility Model Publication (S)
     62-6000

(73) Proprietor: **Kawasaki Jukogyo Kabushiki
     Kaisha
     1-1 Higashikawasakicho 3-chome Chuo-ku
     Kobe-shi Hyogo 650-91(JP)**

     Proprietor: **JAPAN AIR LINES CO., LTD.
     7-3 Marunouchi 2 Chome Chiyoda-ku
     Tokyo 100(JP)**

(72) Inventor: **Hashimoto, Masayuki
     25-3, Hontamon 6 Chome
     Tarumi-ku Kobe 655(JP)**
     Inventor: **Sakamoto, Manabu
     13-16, Ryugaoka 1 Chome
     Nishi-ku Kobe 673(JP)**
     Inventor: **Tsutsui, Taizo
     10-23-604, Sumiyoshiyamate 1 Chome
     Higashinada-ku Kobe 658(JP)**
     Inventor: **Satoh, Satoshi
     14-9, Shioya-cho 6 Chome
     Tarumi-ku Kobe 655(JP)**
     Inventor: **Kouza, Yukihiko
     11-2-201, Minamigoyou 3 Chome
     Kita-ku Kobe 651-11(JP)**
     Inventor: **Murakami, Keikichi
     3-78-304, Yokoo 7 Chome
     Suma-ku Kobe 654(JP)**
     Inventor: **Soga, Tomokatsu
     42-9, Gontazaka 1 Chome
     Hodogaya-ku Yokohama 240(JP)**
     Inventor: **Takeishi, Akira
     59-5, Hino 4 Chome
     Konan-ku Yokohama 233(JP)**

Inventor: **Takusagawa, Teruhiko**
**16-1-302, Masago 2 Chome**
**Chiba 260(JP)**
Inventor: **Hayashi, Misao**
**45-5, Denenchofu 1 Chome**
**Ota-ku Tokyo 145(JP)**

(74) Representative: **Hayward, Denis Edward Peter**
**et al**
**Lloyd Wise, Tregear & Co. Norman House**
**105-109 Strand**
**London WC2R 0AE(GB)**

## Description

This invention relates to a rotating-brush washing apparatus which is particularly useful for washing aircraft, and which is constructed so that a brush part of the apparatus swings or tilts in accordance with the shape of the surface being washed.

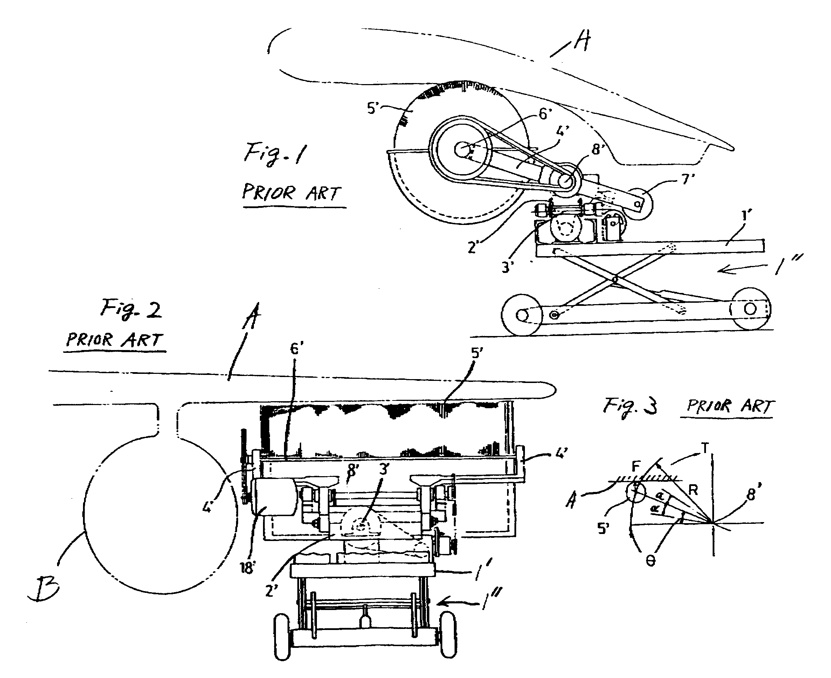

Figures 1 and 2 of the accompanying drawings show the prior art type of washing apparatus which is in common use for washing aircraft, etc. This apparatus includes a base 1' adapted to be moved up and down by a scissors mechanism 1'' on a wheeled platform, and a bed 2' supported on the base 1' via a shaft 3' so that it is capable of a rocking movement from side to side. Two swing arms 4', one on each side, are swingably supported by a shaft 8' on the bed 2'. On the front ends of the arms 4' is supported a shaft 6', on which a roll-shaped rotatable brush 5' is mounted.

On the rearward ends of swing arms 4' is mounted a balance weight 7' for balancing the weight of the brush 5', shaft 6', etc. which are mounted on the front ends of the arms 4'. The rotary drive from a motor 18' mounted on one arm 4' is transmitted via a belt and pulley arrangement to the shaft 6' so that the brush 5' rotates during a washing operation.

Thus, when washing an inclined surface such as the underside of the wing of an aircraft (in Figs. 1 and 2, a wing is indicated by the letter A and an engine is indicated by the letter B), which inclines from where the wing is attached to the fuselage toward the tip of the wing, the bed 2' tilts about the shaft 3' and the washing is performed with the surface of brush 5' following along the inclined surface. Also, when washing a surface which inclines in a direction at right angles to the axis of brush 5' (as illustrated in Fig. 1), the arms 4' swing on the shaft 8' in accordance with the inclination of the surface. This kind of apparatus is featured in Japanese Utility Model Publication (S)62-6000.

With such a prior art apparatus, there is the drawback that the total weight of the swinging members, including the balance weight, is very considerable, thus necessitating large structural members and large power systems for the apparatus.

In addition, as shown in Fig. 3, if the swing torque T of arms 4' is constant, the pressing force F of the brush on the surface being washed will vary in accordance with the change in the angle of inclination of the swing arms. In order to minimise the fluctuation of the pressing force F, it is preferable for the inclination angle to be zero, as shown by the following equation:

$$F = \frac{T}{R \cos (\theta \pm \alpha)}$$

where R is the distance between the shafts 6' and 8', $\theta$ is the initial inclination angle of the arms 4' and $\alpha$ is the angle of swing. The angle $\alpha$ is the angle of pivotal movement of the arms 4 required by the changing angle of the surface being washed. However, because the balance weight 7' and any other balance mechanism protrudes upward, it is difficult for the inclination angle to be made zero. Thus, in the above case, in order for the pressing force F to be constant, the swing torque T to be applied to the swing arm must be varied, and for this function a control device would be required.

It is a general object of this invention to provide a rotating-brush washing apparatus which is an improvement over the prior art apparatus in these respects.

According to the present invention, there is provided a washing apparatus comprising a travelling carriage, a support mounted on the carriage by means enabling the support to be elevated and lowered relatively to the carriage, an approximately horizontally-extending arm mounted by mounting means on the support, and a rotary cleansing brush carried on one end of the arm to be movable into contact with a surface to be cleansed, the mounting means for the arm being such as to enable the arm to swing to adopt varying angles of inclination to the horizontal and also enable the brush on the arm to be tilted to varying angles of tilt, characterised in that the support bears an outer ring member which has its axis approximately horizontal, an inner ring member is coaxially disposed within the outer ring member to rotate therein, the arm passes through the inner ring member and is pivotally mounted therein at a pivot location intermediate the ends of the arm for swinging of the arm up and down in the plane containing the arm, and the rotary brush is mounted on a frame member that extends upwardly above the arm from the end thereof that carries the brush.

The invention will be better understood from the following detailed description of embodiments thereof, given by way of example and with reference to the accompanying drawings, wherein:

Figures 1 and 2 are respectively side and rear views of a prior art aircraft washing apparatus;

Figure 3 illustrates the relationship between the inclination angle of the swing arms of the prior art apparatus, the torque applied to the arms, and the pressing force of the brush of the apparatus against the surface being washed;

Figures 4 to 6 are respectively side, top plan and front views of an aircraft washing apparatus according to one embodiment of the present invention;

Figure 7 is an enlarged fragmentary cross-sectional view taken along the line 7-7 of Figure 4;

Figure 8 is an enlarged and more detailed view of part of Figure 5;

Figure 9 is a schematic plan view showing the apparatus of this embodiment in operation when washing an aircraft;

Figure 10 is a schematic front view showing the apparatus while in operation;

Figure 11 is a pictorial view showing a modification of the washing apparatus according to the invention in which a cover is provided for the rotary brush;

Figure 12 is a side view of the apparatus of Figure 11, but with the cover closed; and

Figure 13 is a side view illustrating the operation of the apparatus of Figures 11 and 12.

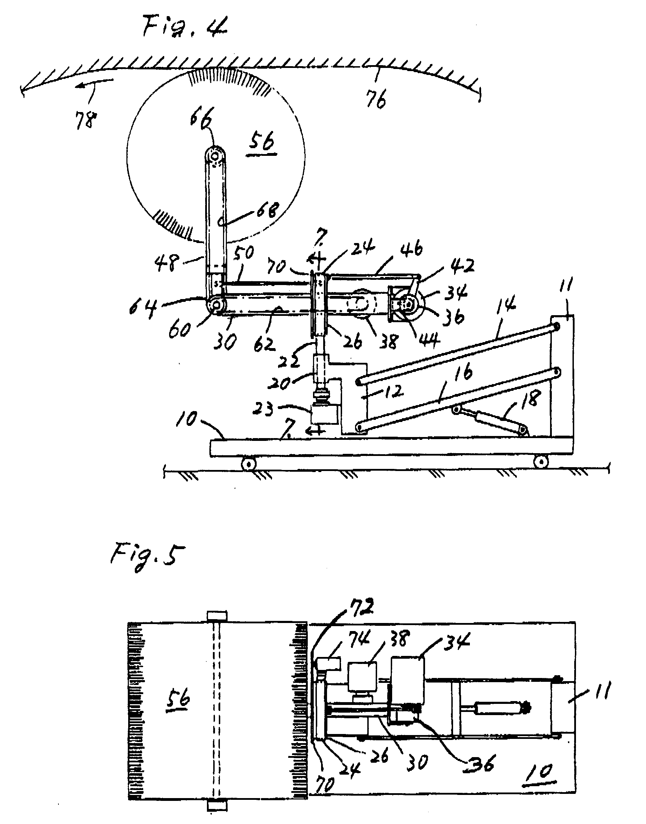

With reference to Figures 4 to 6, the apparatus shown includes a cart or carriage 10 having a vertical support member 11 at its rearward end. On the member 11 is supported a block 12 which is movable up and down on a pair of spaced upper and lower parallel links 14 and 16 which are pivotally connected to the vertical member 11. The member 11, the block 12 and the links 14 and 16 form a four-sided parallel link mechanism. An electrically powered jack cylinder 18 is mounted at one end on the cart 10 and its piston is connected to an intermediate point of the lower link 16, so that the links and the block 12 may be swung up and down.

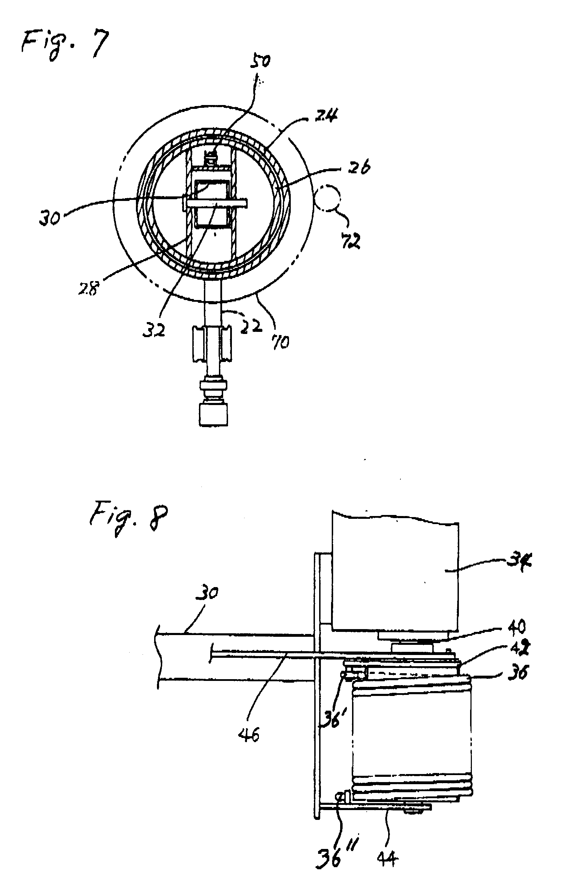

The block 12 has a bearing 20 for rotatably supporting a vertical shaft 22 which is adapted to be driven by a motor 23 mounted on the block 12. To the top end of shaft 22 is fixed an outer ring 24, as best shown in Figure 7, arranged so that the axis of the ring 24 extends substantially horizontally. An inner ring 26 is supported coaxially inside the outer ring 24 so as to be rotatable within the inner periphery of the outer ring. As shown in Figure 7, to the inner periphery of the inner ring 26 is secured a mount 28 formed by two vertical plates, on which a generally horizontal swing arm 30 is pivotally supported by a generally horizontal pin 32. The arm 30 extends from the ring 26 to about equal distances in both the forward and the rearward directions.

As shown in Figures 4, 5 and 8, on the rearward end of the swing arm 30 are mounted a torque motor 34 and a torsion coil spring 36, which act as swing enabling means. Also mounted on the arm 30 adjacent this end is a brush drive motor 38.

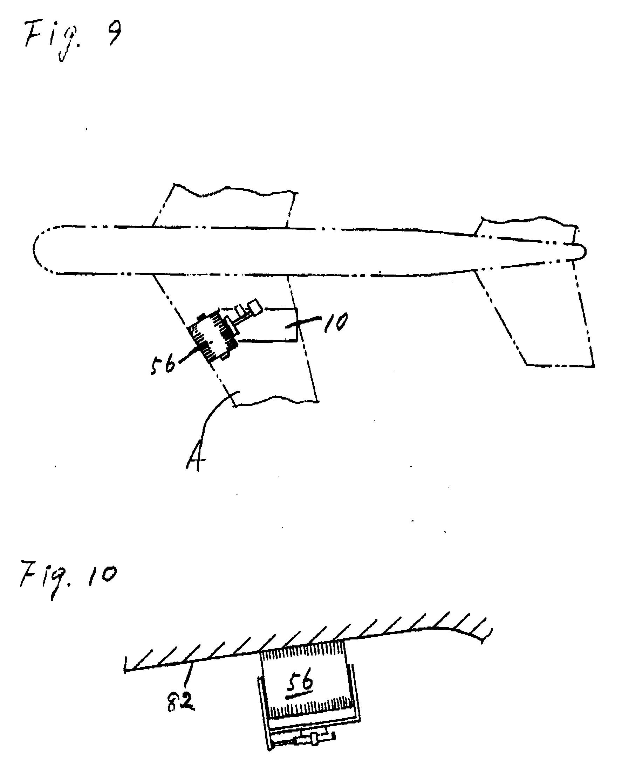

The torque motor 34 has an output shaft 40 (Figure 8) extending in parallel with the pin 32. The motor 34 is adapted to rotate the shaft 40 counterclockwise.

The spring 36 is wound around the output shaft 40. One end 36' of the spring 36 is fixed to one end (see Figure 8) of a lever 42 fixed to the shaft 40, and the other end 36'' of spring 36 is anchored to a bracket 44 fixed to the swing arm 30.

The outer end of the lever 42 is connected with the inner ring 26 by a link 46 (Figure 4) parallel to the swing arm 30. The swing arm 30, including the torque motor 34 and the other parts joined to it, the lever 42, the link 46, the ring 26 and the mount 28 effectively form another four-sided parallel link mechanism.

On the forward end of the swing arm 30 is pivotally supported an upwardly-extending frame 48, which is connected with the inner ring 26 by a link 50 (Figure 4) connected to the mount 28. The arm 30, the frame 48, the link 50 and the mount 28 effectively form a third four-sided parallel link mechanism, which holds the frame 48 in a vertical plane parallel with the radial plane of the rings 24 and 26.

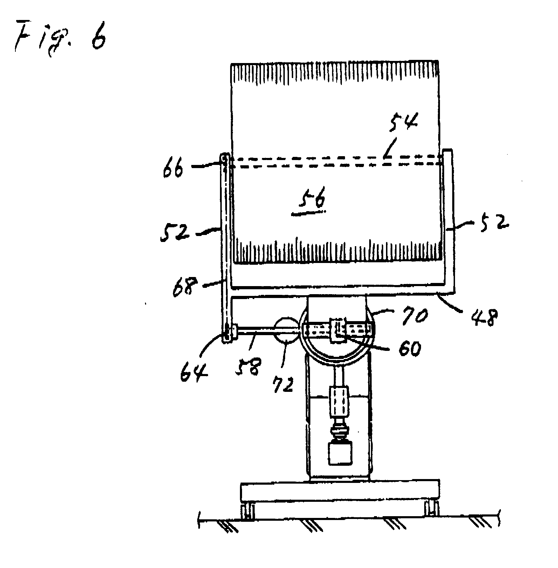

As best shown in Figure 6, the frame 48 includes two vertical side members 52 which journal a shaft 54 adjacent their top ends. A roll-shaped brush 56 is fixed to this shaft 54.

A downward extension of one side member 52 of the frame 48 journals the outer end of a shaft 58 which extends parallel to the brush shaft 54. The shaft 58 is coupled in driving relation with the brush drive motor 38 via a sprocket 60 (Figure 4) fixed to the shaft 58 and a chain 62 housed in the swing arm 30 and extending to a sprocket on the motor shaft. The shaft 58 is also in driving relation with the brush shaft 54 via a sprocket 64 fixed to the shaft 58, a sprocket 66 fixed to the shaft 54, and a chain 68 housed in the side member 52.

The inner ring 26 protrudes a short distance axially beyond the outer ring 24 in the direction toward the forward end of the arm 30. On this protruding portion is fixed a ring gear 70 which meshes with a sprocket 72 (Figures 5 and 6) of a brush inclination motor 74 mounted on the outer ring 24. This enables the swing arm 30 to be rolled about its longitudinal axis thereby tilting the frame 48 and the brush 56.

In operation, the jack cylinder 18 extends or retracts to raise or lower the block 12 so that the brush 56 makes appropriate contact with the surface 76 (Figure 4) to be washed, which may be the underside of a wing of an aircraft.

Next, the torque motor 34 is operated to turn the swing arm 30 clockwise around the pin 32 (Figure 7), with the frame 48 kept in a vertical plane, thus pressing the brush 56 against the surface 76 (since the left end of the link 46 is secured to the inner ring, turning of the lever 42 by the motor 34 will cause the swing arm 30 to swing, but the parallel linkage arrangement holds the frame 48 vertical). In this state, the brush 56 is rotated by operating the motor 38 to accomplish the cleaning of the surface 76.

During the washing process, if, as shown in Figure 4, the surface 76 is inclined downwardly in the direction of travel indicated by arrow 78, the amount of depression of the brush 56 biased by the motor 34 and the spring 36 gradually increases as the washing apparatus travels. At the same time, the reaction force from the surface 76 increases and overcomes the resiliently applied pressing force, thus turning the swing arm 30 counterclockwise and allowing the brush 56 to move downwardly along the inclined surface.

As shown in Figure 9, in order to perform the washing operation with the brush 56 turned slantwise with respect to the direction of travel of the cart 10, the vertical shaft 22 simply has to be turned by operating the motor 23 in order to slant the brush 56 in the horizontal plane.

As shown in Figure 10, if the surface 82 to be washed, which may be the underside of the wing of an aircraft, is inclined downward to the right or left (at right angles to the direction of travel), by energising the motor 74 and thereby rotating the inner ring 26 with respect to the outer ring 24, the arm 30 can be rolled and the brush 56 inclined right or left.

With this washing apparatus, because the weights at the two ends of the swing arm 30 are balanced by appropriate positioning of the brush 56, the frame 48, etc. on one end and the drive motor 38, torque motor 34 and spring 36 on the other end, the need for an additional balance weight is eliminated. Consequently, the parts may be made of lighter weight, and it is possible for structural members of smaller section to be used to support them, thus reducing the overall weight of the apparatus.

Because the weights at the two ends of the swing arm 30 are balanced, and also because the torsion spring 36 is provided in addition to the torque motor 34 in order to provide supplementary force, the brush can be swung by a low-energy torque motor. Furthermore, because the moment of inertia can be reduced as a result of the design described above, the swing responsiveness is improved. The design also ensures that the drive means and swing enabling means do not come close to the surface being washed.

Since a turning means is provided so that the brush can also be swung in a horizontal plane, it is possible, as shown in Figure 9, to maintain the brush in uniform contact with the surface being washed even in areas such as the edges of the wings of an aircraft. The design also places no undesirable restrictions on the angle of inclination of the brush.

With the reductions in weight, smaller power systems can be used in the apparatus. Therefore, as compared with the prior art, the apparatus can be manufactured at lower cost and operated with lower energy consumption and can also be transported with greater ease.

It is possible to arrange for the inclination angle $\theta$ (Figure 3) of the swing arm to be substantially zero during the washing operation, thus maintaining a substantially uniform pressing force against the surface being washed, even if the torque of the arm is constant.

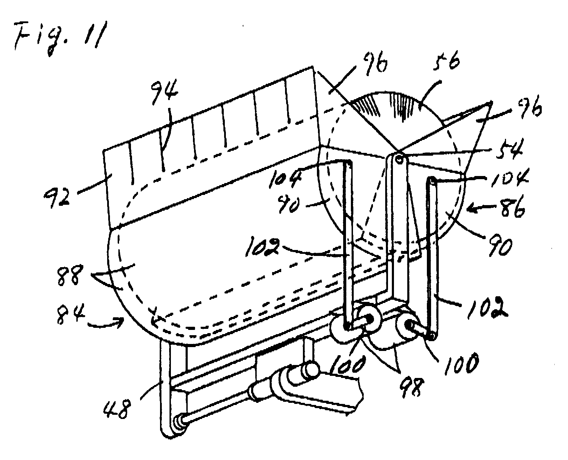

Figures 11 to 13 show a cover which may be provided for the brush of the washing apparatus described above to prevent water drops from dispersing. The frame 48 supporting the brush 56 is substantially the same as shown in Figures 4 to 6.

The cover comprises a pair of split halves 84 and 86, each having a part cylindrical wall 88 and segmental end walls 90. The end walls are supported by the shaft 54 which also carries the brush so that the cylindrical walls 88 are coaxially rotatable around the brush 56. The halves of the cover are suitably larger in diameter and length than the brush 56 so as to enclose the brush. One half 84 is slightly larger in diameter and length than the other half 86 so that one may pass within the other.

On the frame 48 are mounted a pair of drive motors 98. The output shaft of each motor 98 is coupled via a lever and link 100 and 102 to a pin 104 fixed to one end wall 90 of a respective one of the halves 84, 86. The halves are disposed so as to overlap one another at their bottom edges but their upper edges are separated.

To the upper axial edge of each cylindrical wall 88 is fixed a flexible sheet member 92 (Figure 11), which has a number of slits 94 formed in it at intervals. At the radial edge of each end wall 90 is fixed a triangular flexible flap 96 forming an end portion of the sheet 92.

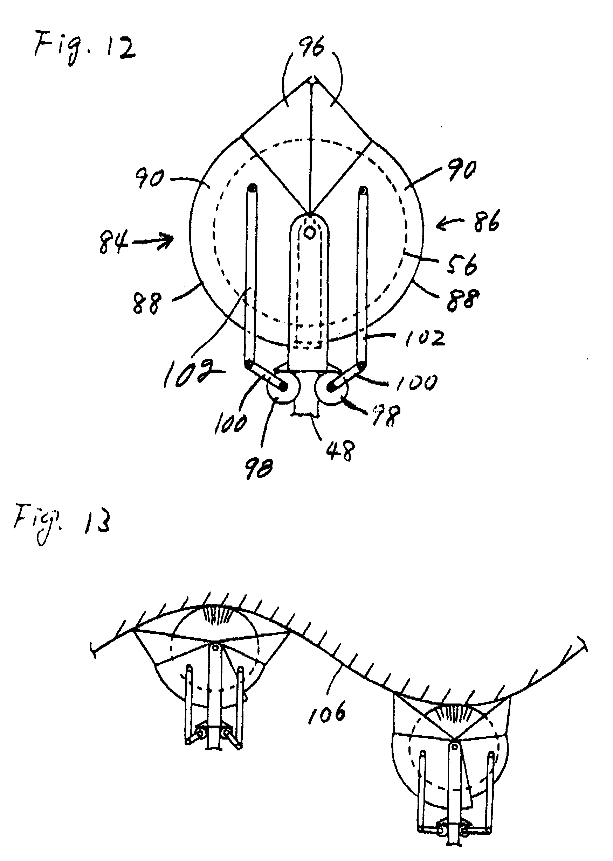

When the apparatus is not in use, as shown in Figure 12, the drives 98 are operated to turn the cover halves 84 and 86 until the free edges of the flexible sheets 92, 96 engage to enclose the brush 56. Then, the covers 84 and 86 are preferably locked by a conventional lock (not shown). This prevents the brush 56 from being exposed to dust, ultraviolet rays, snow, etc. when not in use. Any dust on the brush may damage the surface being washed.

In operation, as shown in Figure 13, the cover halves 84 and 86 are unlocked and opened so that the brush 56 can contact the surface 106 to be washed flanked by the free edges of the sheets 92. The apparatus is then moved along the surface 106, with the brush 56 being rotated and the cover halves turning according to the shape of the surface 106 so that the flexible free edges of the sheets 92 follow the surface.

Thus, the cover halves can follow the variations in contour of the surface as the relative position of the surface and brush changes. At the same time, washing water and cleanser is supplied within the cover by means of spray nozzles (not shown) provided on the cover halves.

By this means, the washing and cleansing by the brush 56 is performed substantially within the cover members, thereby preventing water drops from dispersing, regardless of the shape of the surface 106. The slits 94 in the flexible sheets 92 enable the sheets to pass over relatively large projections on the surface 106 without damaging them.

The positions of the covers and the associated parts of the apparatus in relation to the surface being washed may be controlled with distance-measuring sensors (not shown) mounted on the covers.

## Claims

1. A washing apparatus comprising a travelling carriage (10), a support (12) mounted on the carriage by means (14,16) enabling the support (12) to be elevated and lowered relatively to the carriage (10), an approximately horizontally-extending arm (30) mounted by mounting means (24,26,28,32) on the support, and a rotary cleansing brush (56) carried on one end of the arm (30) to be movable into contact with a surface to be cleansed, the mounting means for the arm (24,26,28,32) being such as to enable the arm (30) to swing to adopt varying angles of inclination to the horizontal and also enable the brush (56) on the arm to be tilted to varying angles of tilt, characterised in that the support (12) bears an outer ring member (24) which has its axis approximately horizontal, an inner ring member (26) is coaxially disposed within the outer ring member (24) to rotate therein, the arm (30) passes through the inner ring member (26) and is pivotally mounted therein at a pivot location (32) intermediate the ends of the arm (30) for swinging of the arm up and down in the plane containing the arm, and the rotary brush (56) is mounted on a frame member (48) that extends upwardly above the arm (30) from the end thereof that carries the brush (56).

2. An apparatus according to claim 1, wherein the mounting means for the support on the carriage comprises a parallel linkage (14,16).

3. An apparatus according to claim 1 or claim 2, wherein the support comprises a vertical shaft (22), the outer ring member is fixed to the upper end of this vertical shaft and drive means (23) are provided for rotating the shaft.

4. An apparatus according to any preceding claim, wherein drive means (70,72) are provided for rotating the inner ring within the outer ring.

5. An apparatus according to any preceding claim, wherein means are provided for swinging the arm on its pivotal mounting which means comprise a torque motor (34) and a torsion spring (36) mounted on the end of the arm opposite to that which carries the brush and both coupled to a torque shaft (40) parallel to the pivot axis of the arm, the torque shaft being operatively connected to swing the arm via a parallel linkage (26,30,42,46) lying in the plane of swing.

6. An apparatus according to any preceding claim, wherein the frame member carrying the rotary brush is pivotally mounted at its lower end on the respective end of the arm and a parallel linkage (28,30,48,50) maintains the frame member in the vertical plane as the arm swings.

7. An apparatus according to any preceding claim, wherein the rotary brush is driven by a motor (38) mounted on the arm at a position on the opposite side of the arm pivot to the brush mounting, the drive being transmitted via driving connections (58,60,62,64,66,68) extending along the arm and up the frame member carrying the brush.

8. An apparatus according to any preceding claim, further comprising a cover (88,90) to enclose the rotary brush when it is not in use.

9. An apparatus according to claim 8, wherein the brush cover comprises two substantially sectoral halves (84,86) mounted to move angularly in opposite directions about the shaft axis of the brush to open and close the cover.

10. An apparatus according to claim 9, further comprising respective drive means (98,100,102) for moving the brush cover halves to vary the extent of opening of the cover according to variations in the contour of the surface (106) being cleaned.

**Patentansprüche**

1. Waschvorrichtung mit einem Laufwagen (10), einem Halter (12), der durch Mittel (14, 16) auf dem Wagen befestigt ist, welche den Halter (12) befähigen, relativ zum Wagen (10) hochgehoben und abgesenkt zu werden, einem sich annähernd horizontal erstreckenden Arm (30), der durch Befestigungsmittel (24, 26, 28, 32) an dem Halter befestigt ist und einer rotierbaren Reinigungsbürste (56), die an einem Ende des Arms (30) getragen wird, um bewegbar mit einer zu reinigenden Oberfläche in Kontakt gebracht werden zu können, wobei die Befestigungsmittel für den Arm (24, 26, 28, 32) derart sind, daß sie den Arm (30) zum Schwingen befähigen, damit er variierende Neigungswinkel zur Horizontalen annimmt und daß sie ebenfalls die Bürste (56) auf dem Arm befähigen, um um variierende Kippwinkel gekippt zu werden,
dadurch gekennzeichnet,
daß der Halter (12) ein äußeres Ringbauteil (24) trägt, dessen Achse annähernd horizontal ist, daß ein inneres Ringbauteil (26) koaxial innerhalb des äußeren Ringbauteils (24) angeordnet ist, um darin zu rotieren, daß der Arm (30) durch das innere Ringbauteil (26) hindurchgeht und darin an einem zwischen den Enden des Arms (30) liegenden Drehort (32) drehbar befestigt ist, um den Arm in der Ebene, welche den Arm enthält, aufwärts und abwärts zu schwingen, und daß die rotierbare Bürste (56) an einem Rahmenbauteil (48) befestigt ist, das sich aufwärts über dem Arm (30) von dem Ende erstreckt, welches die Bürste (56) trägt.

2. Vorrichtung nach Anspruch 1, worin das Befestigungsmittel für den Halter auf dem Wagen ein paralles Gestänge (14, 16) umfaßt.

3. Vorrichtung nach Anspruch 1 oder 2, worin der Halter eine vertikale Welle (22) umfaßt, daß äußere Ringbauteil an dem oberen Ende dieser vertikalen Welle befestigt ist und Antriebsmittel (32) zur Rotierung der Welle vorgesehen sind.

4. Vorrichtung nach einem der vorhergehenden Ansprüche, worin Antriebsmittel (70, 72) vorgesehen sind, um den inneren Ring innerhalb des äußeren Rings rotieren.

5. Vorrichtung nach einem der vorhergehenden Ansprüche, worin Mittel zum Schwingen des Arms in seiner zentralen Befestigung vorgesehen sind, wobei die Mittel einen Drehmomenterzeugermotor (34) und eine Torsionsfeder (36) umfassen, die am Ende des Arms befestigt ist, das gegenüber von dem Ende liegt, welches die Bürste trägt, und beide an einer Drehmomentwelle (40) befestigt sind, die parallel zur Drehachse des Arms liegt, wobei die Drehmomentwelle betriebsfähig befestigt ist, um den Arm über ein paralleles Gestänge (26, 30, 42, 46), welches in der Schwingebene liegt, zu schwingen.

6. Vorrichtung nach einem der vorhergehenden Ansprüche, worin das Rahmenbauteil, welche die rotierbare Bürste trägt, an seinem unteren Ende drehbar am jeweiligen Ende des Arms befestigt ist und ein paralleles Gestänge (28, 30, 48, 50) das Rahmenbauteil in der vertikalen Ebene hält, wenn der Arm schwingt.

7. Vorrichtung nach einem der vorhergehenden Ansprüche, worin die rotierbare Bürste durch Rotor (38) angetrieben wird, welcher auf dem Arm in einer Position befestigt ist, die zur Bürstenbefestigung auf der gegenüberliegenden Seite des Armdrehpunkts liegt, wobei der Antrieb über Antriebsverbindugnen (58, 60, 62, 64, 66, 68) übertragen wird, welche sich entlang des Arms und das Rahmenbauteil hinauf, das die Bürste trägt, erstrecken.

8. Vorrichtung nach einem der vorhergehenden Ansprüche, welche weiterhin eine Hülle (88, 90) umfaßt, um die rotierbare Bürste zu umschließen, wenn sie nicht in Gebrauch ist.

9. Vorrichtung nach Anspruch 8, worin die Bürstenhülle (2) im wesentlichen sektorale Hälften (84, 86) umfaßt, welche befestigt sind, um sich winklig in entgegengesetzten Richtungen um die Wellenachse der Bürste zum Öffnen und Schließen der Hülle zu bewegen.

10. Vorrichtung nach Anspruch 9, welche weiterhin jeweilige Antriebsmittel (98, 100, 102) zur Bewegung der Bürstenhüllenhälften umfaßt, um die Erstreckung der Öffnung der Hülle gemäß den Variationen in der Kontur der Oberfläche (106), die gereinigt wird, zu variieren.

**Revendications**

1. Un dispositif de lavage comprenant un chariot (10) mobile, un support (12) monté sur le chariot à l'aide de moyens (14,16) permettant au support (12) d'être levé et baissé par rapport au chariot (10) , un bras (30) qui s'étend à peu prés horizontalement et qui est monté sur le support à l'aide de moyens de montage (24,26,28,32), et une brosse de nettoyage (56) tournante, portée à une extrémité du bras (30), de façon à être déplaçable en contact avec une surface à nettoyer, le moyen de montage du bras (24,26,28,32) étant tel qu'il permet au bras (30) d'osciller de façon à adopter différents angles d'inclinaison par rapport à l'horizontale et également qu'il permet à la brosse (56) montée sur le bras d'être basculée à différents angles de basculement, caractérisé en ce que le support (12) porte un organe annulaire extérieur (24) dont l'axe est à peu près horizontal, un organe annulaire intérieur (26) est disposé coaxialement à l'intérieur de l'organe annulaire extérieur (24), de façon à y tourner intérieurement le bras (30) passe à travers l'organe annulaire intérieur (26) et est monté pivotant à l'intérieur, en un point de pivotement (32) intermédiaire entre les extrémités du bras (30), de façon à faire basculer le bras vers le haut et le bas dans le plan contenant le bras, et la brosse tournante (56) est montée sur un organe de cadre (48) qui s'étend vers le haut au-dessus du bras (30), depuis son extrémité portant la brosse (56).

2. Un dispositif selon la revendication 1, dans lequel le moyen de montage du support sur le chariot comprend une articulation parallèle (14,16).

3. Un dispositif selon la revendication 1 ou 2, dans lequel le support comprend un arbre vertical (22), l'organe annulaire extérieur est fixé à l'extrémité supérieure de cet arbre vertical et des moyens d'entraînement (23) sont prévus pour faire tourner l'arbre.

4. Un dispositif selon l'une quelconque des revendications précédentes, dans lequel des moyens d'entraînement (70,72) sont prévus pour faire tourner la bague intérieure à l'intérieur de la bague extérieur.

5. Un dispositif selon l'une quelconque des revendications précédentes, dans lequel des moyens sont prévus pour faire osciller le bras sur son montage pivotant, ces moyens comprenant un moteur-couple (34) et un ressort de torsion (36) montés sur l'extrémité du bras opposée à celle qui porte la brosse et tous deux étant couplés à un arbre de torsion (40) parallèle à l'axe de pivotement du bras, l'arbre de torsion étant relié fonctionnellement de façon à faire osciller le bras par l'intermédiaire d'une articulation parallèle (26,30,42,46) situé dans le plan d'oscillation.

6. Un dispositif selon l'une quelconque des revendications précédentes, dans lequel l'organe de cadre portant la brosse tournante est monté pivotant à son extrémité inférieure sur l'extrémité respective du bras et une articulation parallèle (28,30,48,50) maintient l'organe de cadre dans le plan vertical lorsque le bras oscille.

7. Un dispositif selon l'une quelconque des revendications précédentes, dans lequel la brosse tournante est entraînée par un moteur (38) monté sur le bras, en une position sur le côté opposé du pivot de bras, par rapport au montage de la brosse, le mouvement d'entraînement étant transmis par l'intermédiaire de liaisons d'entraînement (58,60,62,64,66,68) s,étendant le long du bras et jusqu'à l'organe de cadre portant la brosse.

8. Un dispositif selon l'une quelconque des revendications précédentes, comprenant en outre un capot (88,90) destiné à enfermer la brosse tournante lorsqu'elle n'est pas en fonctionnement.

9. Un dispositif selon la revendication 8, dans lequel le capot de brosse comprend deux moitiés (84,86) formant pratiquement des secteurs, montées de façon à se déplacer angulairement dans des directions opposées autour de l'axe d'arbre de las brosse, de façon à ouvrir et fermer le capot.

10. Un dispositif selon la revendication 8, comprenant en outre des moyens d'entraînement (98,100,102) respectifs, destinés à déplacer les moitiés de capot de brosse, de façon à faire varier le degré d'ouverture du capot en fonction des variations du contour de la surface (106) à nettoyer.

Fig. 1
PRIOR ART

Fig. 2
PRIOR ART

Fig. 3    PRIOR ART

EP 0 304 193 B1

Fig. 4

Fig. 5

Fig. 6

Fig. 7

Fig. 8

Fig. 9

Fig. 10

Fig. 11

Fig. 12

Fig. 13